(19) Europäisches Patentamt
European Patent Office
Office européen des brevets

(11) **EP 0 936 382 B1**

(12) **FASCICULE DE BREVET EUROPEEN**

(45) Date de publication et mention
de la délivrance du brevet:
**16.06.2004 Bulletin 2004/25**

(51) Int Cl.⁷: **F16H 37/08**, F16H 3/72,
F16H 1/46

(21) Numéro de dépôt: **99400263.2**

(22) Date de dépôt: **05.02.1999**

(54) **Dispositif de réduction de vitesse de rotation**

Mechanische Vorrichtung zur Reduzierung der Drehzahl

Mechanical device for rotational speed reduction

(84) Etats contractants désignés:
**BE CH DE ES FR GB IT LI**

(30) Priorité: **16.02.1998 FR 9801827**

(43) Date de publication de la demande:
**18.08.1999 Bulletin 1999/33**

(73) Titulaire: **MOTEURS ALEXANDRE S.A.**
**28190 Saint Georges sur Eure (FR)**

(72) Inventeur: **Le Tien, Phu**
**28000 Chartres (FR)**

(74) Mandataire: **Debay, Yves**
**Cabinet Debay,**
**126 Elysée 2**
**78170 La Celle Saint Cloud (FR)**

(56) Documents cités:
DE-A- 3 619 069        FR-A- 486 605
GB-A- 2 175 668        US-A- 1 596 025
US-A- 1 604 112        US-A- 5 310 387

• SOULIERE E G: "SPEED REDUCER" IBM
TECHNICAL DISCLOSURE BULLETIN, vol. 21,
no. 9, 1 février 1979, page 3452 XP002059244

**Description**

La présente invention concerne un dispositif de réduction de vitesse de rotation. Le réducteur de vitesse permet d'obtenir une vitesse de rotation de sortie plus faible que la vitesse d'entrée, appelée vitesse source.

Il est connu dans l'art antérieur deux types de réducteurs, les réducteurs classiques et les réducteurs planétaires.

Les réducteurs classiques sont basés sur l'utilisation d'un engrènement pignon menant/roue menée. Dans ce type de réducteur, la vitesse de la roue est plus faible que la vitesse du pignon. La vitesse source est alors communiquée au pignon qui entraîne la roue à une vitesse angulaire plus faible, puisque de manière générale la roue a un diamètre plus grand que le pignon.

Les réducteurs de type planétaire sont basés sur l'utilisation d'un engrènement pignon/satellites/couronne, les satellites étant montés sur un plateau. Dans ce type de réducteurs, une seule des deux pièces suivantes, plateau porte-satellites ou couronne est fixe. La vitesse source est de manière générale communiquée au pignon. Cette vitesse est ensuite réduite par l'intermédiaire des satellites et de la couronne. La vitesse de sortie est fournie par l'une des deux pièces, plateau porte-satellites ou couronne, qui n'est pas fixe.

Il est également connu de combiner dans un réducteur les deux types de réducteurs.

Les réducteurs de type planétaire sont plus silencieux, par contre ils sont encombrants et, pour des rapports de réduction élevés, ont un coût également élevé.

Il est également connu par le brevet américain US 1 604 112 un réducteur particulier. Le réducteur comprend essentiellement un axe menant qui entraîne une pluralité de satellites par l'intermédiaire d'un premier engrenage. Les satellites engrènent également sur la denture intérieure d'une couronne. Le premier engrenage de l'axe menant engrène également sur un deuxième engrenage monté rigidement sur un premier axe intermédiaire. Ce deuxième engrenage engrène sur un troisième engrenage d'un deuxième axe intermédiaire. Ce deuxième axe intermédiaire comprend également un quatrième engrenage engrenant sur une denture extérieure de la couronne. Cette couronne est montée glissante sur le plateau portant les axes des satellites et comportant l'axe mené. Ainsi, deux vitesses sont appliquées respectivement aux satellites et à la couronne et permettent de mettre en rotation le plateau porte satellite. Le premier axe intermédiaire et le deuxième engrenage n'interviennent pas dans le calcul du rapport de réduction. En effet, le deuxième engrenage est à la fois menant et mené. La fonction du deuxième engrenage consiste simplement à transmettre le même mouvement de rotation du premier engrenage au quatrième engrenage sans opérer de réduction, de sorte que le sens de rotation du deuxième axe intermédiaire soit identique au sens de rotation de l'axe menant pour obtenir une réduction de la vitesse de sortie. Ce réducteur particulier comprend de nombreux inconvénients. Notamment, certaines pièces comme le deuxième engrenage et le premier axe intermédiaire n'interviennent pas dans le procédé de réduction, ce qui augmente le coût du réducteur. De plus, l'encombrement de ce réducteur est important par rapport au taux de réduction obtenu.

Il est aussi connu par le brevet FR 486 605 un dispositif d'augmentation de vitesse comprenant un plateau sur lequel sont montés les axes de satellites s'engrenant d'un côté sur un pignon et de l'autre côté sur la denture intérieure d'une couronne. La vitesse de rotation de l'axe du pignon constitue la vitesse de sortie. La vitesse d'entrée est injectée sur l'axe commun à deux premiers pignons, chaque premier pignon ayant un diamètre différent. Un deuxième pignon s'engrène sur chaque premier pignon, chaque deuxième pignon ayant un axe différent. Un troisième pignon, de même axe que chaque deuxième pignon, mais de diamètre différent, s'engrène respectivement sur la denture extérieure de la couronne ou un quatrième pignon de même axe que le plateau. Le dispositif utilisé à l'envers sert de réducteur de vitesses.

il est également connu par le brevet US 1 596 025 un réducteur de vitesse comprenant un pignon dont une première denture s'engrène sur des satellites dont les axes sont montés sur un plateau denté, les satellites s'engrenant sur une couronne. Le pignon possède une deuxième denture sur laquelle s'engrène un deuxième pignon dont l'axe comprend un troisième pignon qui s'engrène sur le plateau.

Le brevet DE 36 19 069 décrit enfin un dispositif de réduction de vitesse comprenant toutes les caractéristiques du préambule de la revendication 1.

La présente invention a donc pour objet de proposer un dispositif de réduction économique permettant d'obtenir un rapport de réduction élevé avec un encombrement faible.

Ce but est atteint par les caractéristiques de la revendication 1. D'autres particularités du dispositif de réduction font l'objet des revendications 2 à 4.

D'autres particularités et avantages de la présente invention apparaîtront plus clairement à la lecture de la description ci-après faite en référence aux dessins annexés dans lesquels :

- la figure 1 représente un schéma de principe du mécanisme d'entraînement du dispositif de réduction selon l'invention,
- la figure 2 représente une vue en coupe de la réalisation du mécanisme d'entraînement faisant partie du dispositif de réduction selon l'invention,
- les figures 3A et 3B représentent des diagrammes de procédés de réduction de vitesse utilisant le dispositif de réduction de vitesse angulaire selon l'invention, et représentent un pavé C de création et un pavé T d'entraînement,

- les figures 4,5,7 et 8 représentent des vues en coupe de dispositifs de réduction de vitesse angulaire ne faisant pas partie de l'invention telle que revendiquée. La figure 6 représente une vue en coupe de réalisation d'une variante du dispositif tel que revendiqué.

La variante de réalisation décrite ci-après n'est donnée qu'à titre d'exemple illustratif du principe de l'invention et ne constitue pas une limitation de l'application du principe à la variante décrite.

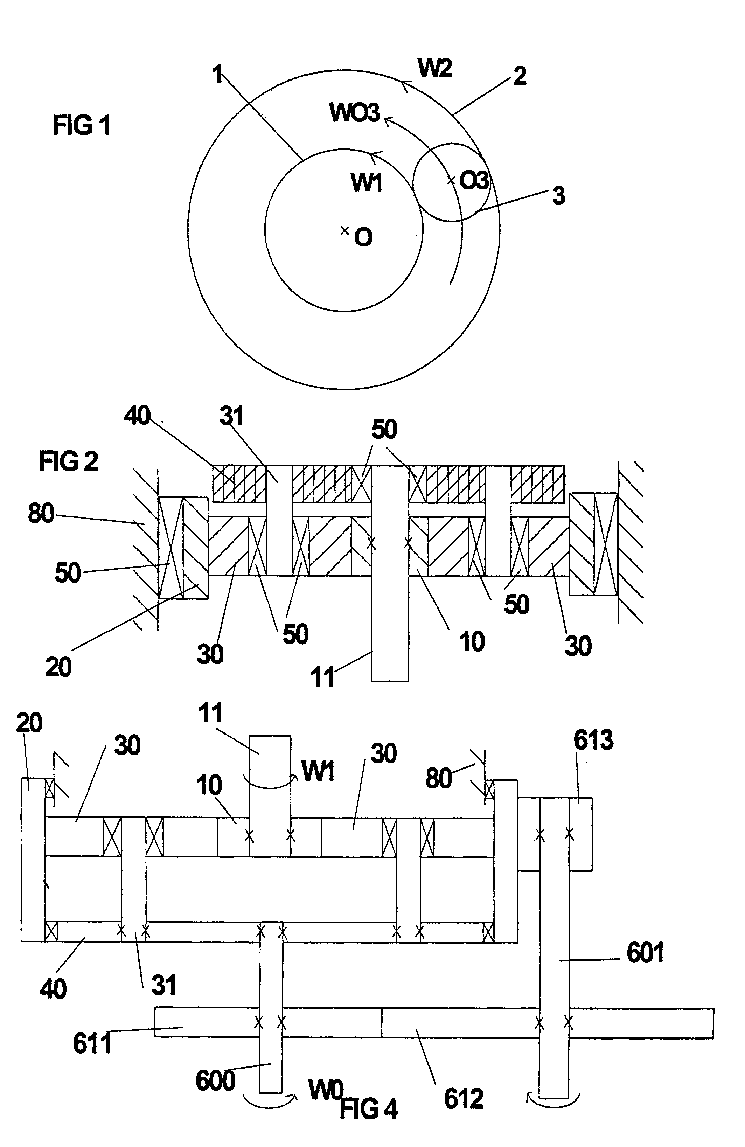

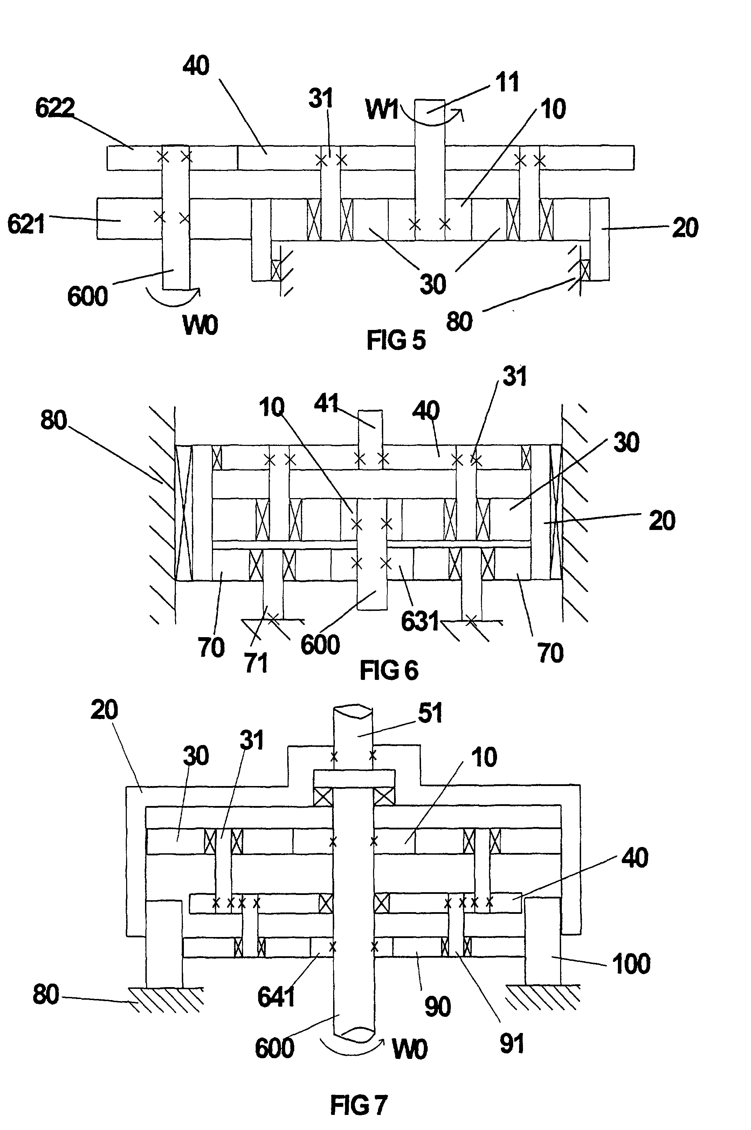

La figure 1 représente schématiquement le principe du mécanisme d'entraînement du dispositif de réduction selon l'invention. Le mécanisme d'entraînement selon l'invention est basé sur le principe de l'utilisation de trois éléments (1 à 3) animés d'un mouvement de rotation. Les trois éléments précités comprennent un premier (1) et un deuxième éléments (2) circulaires, concentriques et de rayons (R1, R2) déterminés distincts. On choisit pour la suite de la description R2 supérieur à R1. Les vitesses angulaires des premier (1) et deuxième (2) éléments sont respectivement W1 et W2. Le troisième élément est également circulaire de rayon (R3) déterminé et en contact avec les premier (1) et deuxième (2) éléments. Autrement dit, le troisième (3) élément est placé à l'extérieur du cercle formé par le premier (1) élément et à l'intérieur du cercle formé par le deuxième (2) élément. Le troisième (3) élément a un mouvement de rotation par rapport à son centre (O3). La vitesse de rotation du troisième (3) élément par rapport à son centre peut être nulle. Le mouvement du troisième (3) élément par rapport aux premier (1) et deuxième (2) éléments s'effectue tangentiellement et sans glissement. Le centre (03) du troisième (3) élément décrit une trajectoire circulaire concentrique par rapport aux premier (1) et deuxième (2) éléments.

Ainsi, les vitesses de rotation respectives (W1, W2, WO3) des deux éléments (1, 2) et du centre (O3) du troisième élément (3) ont le même centre, confondu avec les centres du premier (1) et du deuxième (2) éléments et le centre de la trajectoire circulaire du centre (O3) du troisième élément (3).

Le mécanisme d'entraînement comprend, par exemple, plusieurs éléments du même type que le troisième (3).

Compte tenu de la disposition des différents éléments (1, 2, 3), il existe la relation suivante entre la valeur des rayons des trois éléments (1, 2, 3):

$$R2 = R1+(2xR3).$$

De plus, les vitesses respectives (W1, W2, WO3) sont liées par la relation :

$$(R1+R2)xWO3 = (R1xW1)+(R2xW2).$$

Ainsi, les valeurs des rayons étant nécessairement connues, il suffit de connaître deux des trois vitesses angulaires des différents éléments pour déduire la troisième vitesse angulaire. On obtient donc trois formules (F1 à F3) déterminant une vitesse angulaire à partir de la connaissance des deux autres.

Soit F1, la formule déterminant la valeur de W1 connaissant W2 et WO3:

$$W1 = ((R1+R2)xWO3-(R2xW2))/R1.$$

Soit F2, la formule déterminant la valeur de WO3 connaissant W1 et W2:

$$WO3 = ((R1xW1)+(R2xW2))/(R1+R2).$$

Soit F3, la formule déterminant la valeur de W2 connaissant W1 et WO3:

$$W2 = ((R1+R2)xWO3-(R1xW1))/R2.$$

La figure 2 représente une vue en coupe de réalisation du mécanisme d'entraînement faisant parti du dispositif de réduction selon l'invention.

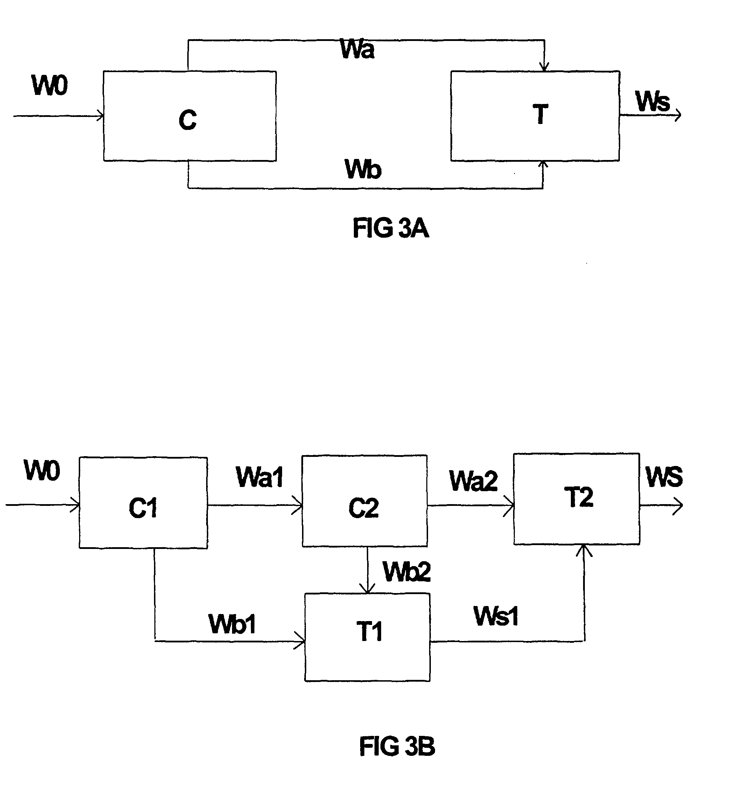

Le premier élément (Fig. 1, 1) comprend, par exemple, un pignon (10), le deuxième élément (Fig. 1, 2) comprend une couronne (20), et le troisième élément (Fig. 1, 3) comprend au moins un satellite (30).

Le ou les axes (31) du ou des satellites (30) sont montés fixes (signe x sur les figures) sur un plateau porte-satellites (40) et le ou les satellites sont montés glissant sur leurs axes. Cependant, il est à la porté de l'homme de métier de modifier cette disposition pour obtenir le même résultat. Ainsi, le ou les satellites peuvent être montés en liaison rigides sur leurs axes, ces derniers étant alors montés glissant sur le plateau porte-satellites.

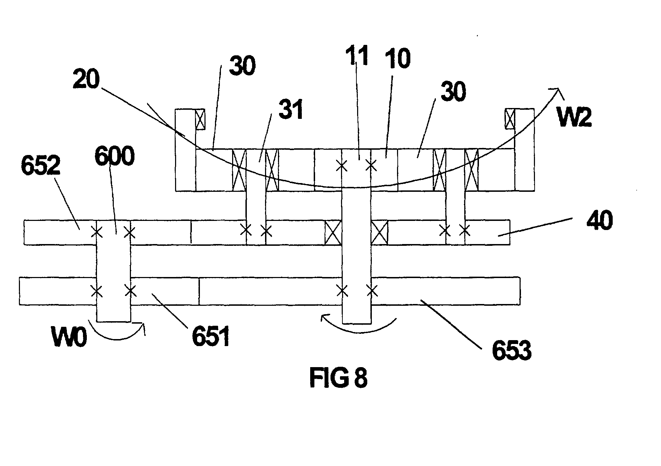

Le pignon (10) est fixé rigidement sur un axe (11). Le plateau (40) est monté fou par rapport à l'axe (11) du pignon (10) (signe lxl portant la référence 50 sur les figures). La couronne (20) est montée folle par rapport à son axe de symétrie sur un bâti (80). Le ou les satellites (30) sont montés fous par rapport à leur axe (31 ). Ainsi les différents éléments (10, 20, 30, 40) peuvent avoir des mouvements de rotation dans un sens ou dans un autre. Les différents éléments (10, 20, 30, 40) sont bloqués en translation les uns par rapport aux autres et par rapport à un repère fixe, par exemple, le bâti (80) protégeant les trois éléments (10, 20, 30). Ainsi, les seuls mouvements autorisés pour chaque élément sont des rotations autour de leur axe de symétrie ou en ce qui concerne le ou les centres du ou des satellites (30), un mouvement de rotation autour de l'axe (11) du pignon (10). De même dans toues les variantes de réalisations décrites ultérieurement en références aux figures 4 à 8 la couronne (20) est montée glissante en au moins un point fixe par rapport au bâti (80).

Les liaisons, sans glissement, entre le pignon (10) et le ou les satellites (30), et entre la couronne (20) et le ou les satellites (30) sont assurées, par exemple, par des dentures. Ainsi, la denture des satellites (30) engrène sur une denture, dite intérieure, située sur la face intérieure de la couronne (20) et sur la denture du pignon (10).

La rotation libre, du ou des satellites (30) sur leur axe (31), du plateau (40) par rapport à l'axe (11) du pignon (10), et de la couronne (20) par rapport au bâti (80) est assurée, par exemple, par un système de roulement (50).

Le fonctionnement du mécanisme d'entraînement faisant parti du dispositif de réduction selon l'invention est le suivant: lorsque l'on applique deux vitesses de rotation connues et non nulles créées par l'intermédiaire d'un mécanisme de création (décrit ultérieurement), par exemple, au pignon (10) et à la couronne (20) alors le ou les satellites (30), étant montés fous, vont être entraînés en rotation autour de leur axe (31) de symétrie grâce à la liaison sans glissement, d'une part entre la couronne (20) et le ou les satellites (30), et d'autre part entre le pignon (10) et le ou les satellites. Puisque le plateau (40) est également monté fou sur l'axe (11) du pignon (10) et qu'il est solidaire des axes (31) des satellites (30), il est également animé d'un mouvement de rotation autour de son axe de symétrie (11). Dans ce cas particulier, la vitesse de sortie est la vitesse de rotation du plateau (40) qui est déterminée par le formule F2.

Si, par contre, les deux vitesses connues et non nulles sont appliquées au plateau (40) et au pignon (10), alors, pour les mêmes raisons que dans l'exemple précédent, la vitesse de sortie est la vitesse de rotation de la couronne (20) qui est déterminée par la formule F3. Enfin, si les deux vitesses de rotations connues et non nulles sont appliquées au plateau (40) et à la couronne (20), alors la vitesse de sortie est la vitesse de rotation du pignon (10) qui est alors déterminée par la formule F1.

Le dispositif de réduction de vitesse angulaire selon l'invention comprend également un mécanisme de création de vitesses. En effet, le procédé classique de réduction consiste à obtenir une vitesse de rotation de sortie plus faible que la vitesse d'entrée dite vitesse source. On constate tout d'abord que dans ce procédé, l'utilisateur ne dispose que d'une vitesse d'entrée connue et qu'on désire obtenir une vitesse de sortie connue plus faible. Or le mécanisme d'entraînement, faisant partie du dispositif de réduction selon l'invention, nécessite la connaissance de deux vitesses de rotation afin d'obtenir une vitesse de sortie déterminée par l'une des trois formules F1, F2 et F3. Par conséquent, le mécanisme de création de vitesses du dispositif de réduction selon l'invention permet de réaliser une étape préalable appelée étape de création de vitesses.

Cette étape a pour objet de transformer la vitesse source connue en au moins deux vitesses de rotation corrélées, non nulles et déterminables en fonction de la vitesse source. Cette étape précède l'étape de transmission utilisant les deux vitesses angulaires créées et mettant en oeuvre le mécanisme d'entraînement du dispositif de réduction selon l'invention. Les deux étapes combinées représentent le dispositif de réduction de vitesse angulaire.

La figure 3A représente schématiquement le diagramme de base du dispositif de réduction composé d'une étape (C) de création et d'une étape (T) de transmission de vitesse.

L'étape (T) représente le mécanisme d'entraînement du dispositif de réduction selon l'invention auquel sont appliquées deux vitesses corrélées et déterminées à partir de la vitesse source grâce à l'étape C.

L'étape (C) de création de vitesses crée deux vitesses $(W_a, W_b)$ à partir d'une vitesse source connue $(W_0)$ indifféremment telles que : $W_a = a \times W_0$ et $W_b = b \times W_0$ avec a et b positifs, ou négatifs ou égaux à 1 mais non nuls. Ces deux vitesses $(W_a$ et $W_b)$ servent ensuite, à l'étape de transmission (T) et permettent d'obtenir une vitesse réduite en sortie $(W_s)$.

Selon le choix des éléments du mécanisme d'entraînement auxquels on applique les vitesses $W_a$ et $W_b$ connues, la vitesse de sortie sera déterminée par une des trois formules F1, F2 ou F3. Ainsi, on obtient par exemple les trois cas de configurations suivantes :

- Si $W_a = W_2$ et $W_b = W_{03}$, alors $W_s$ est déterminée par la formule F1 et correspond à la vitesse $W_1$. Pour que $W_1$ soit, par exemple, le plus faible possible, $W_a$ et $W_b$ doivent être de même signe.
- Si $W_a = W_1$ et $W_b = W_2$, alors $W_s$ est déterminée par la formule F2 et correspond à la vitesse $W_{O3}$. Pour que $W_{O3}$ soit, par exemple, le plus faible possible, $W_a$ et $W_b$ doivent être de signe contraire.
- Si $W_a = W_1$ et $W_b = W_{03}$, alors $W_s$ est déterminée par la formule F3 et correspond à la vitesse $W_2$. Pour que $W_2$ soit, par exemple le plus faible possible, $W_a$ et $W_b$ doivent être de même signe.

Bien sûr, l'invention n'est pas limitée à l'exemple de la figure 3A et il est possible de combiner plusieurs étapes (C) de création de vitesses avec plusieurs étapes (T) de transmission sachant qu'il est nécessaire d'avoir dans la combinaison au moins une étape (C) de création de vitesses et que chaque étape (T) de transmission nécessite deux et seulement deux vitesses à l'entrée. Ces deux vitesses d'entrées peuvent provenir indifféremment d'au moins:

- une étape de création (C) de vitesses amont,
- ou de deux étapes (T) de transmission amont,
- ou d'une étape de création (C) de vitesse amont et d'une étape (T) de transmission amont.

La figure 3B représente un autre exemple d'un diagramme composé d'un procédé de réduction mettant en jeu une pluralité d'étapes (C) de création de vitesses et une pluralité d'étapes (T) de transmission.

Ainsi un premier mécanisme C1 de création de vitesses génère sur une première sortie une vitesse Wa1 d'entrée pour un second mécanisme C2 de création de vitesses et sur une deuxième sortie une première vitesse d'entrée Wb1 d'un mécanisme d'entraînement T1. Le deuxième mécanisme C2 de création de vitesse génère sur une première sortie une vitesse d'entrée Wa2 pour un second mécanisme d'entraînement T2 et sur une seconde sortie une deuxième vitesse d'entrée Wb2 pour le premier mécanisme d'entraînement T1 dont la sortie Ws1 constitue la vitesse d'entrée du second mécanisme d'entraînement T2. Ce dernier mécanisme d'entraînement T2 a la vitesse de sortie Ws.

Les étapes de création de vitesses sont effectuées par des mécanismes de création de vitesses faisant partie du dispositif de réduction de vitesse angulaire selon l'invention. A titre d'exemple, l'étape de création de vitesse est obtenue par un système d'engrènement d'un pignon avec, par exemple plusieurs roues. Dans cet exemple, la vitesse source est appliquée au pignon et les vitesses sont crées par la rotation des roues de diamètre différents. L'étape de création de vitesses peut également être obtenue, par un système d'engrènement pignon/satellite(s)/couronne où, par exemple, les axes des satellites sont fixés et où la vitesse source est appliquée à deux pignons montés rigidement sur un même axe. Dans cet exemple, les deux vitesses sont d'une part, la vitesse de rotation du premier pignon et d'autre part, la vitesse de rotation de la couronne, générée par la rotation des satellites engrenant sur le deuxième pignon.

Les figures 4,5,7 et 8 représentent des vues en coupe de dispositifs de réduction de vitesse angulaire. La figure 6 représente un exemple de réalisation du dispositif de réduction de vitesse selon l'invention telle que revendiquée et qui est basé sur le diagramme de base (3A). Dans les figures 4 à 8, le mécanisme de création de vitesse comprend un premier axe (600) auquel est appliquée la vitesse source W0.

Dans le dispositif de la figure 4, le premier axe (600) transmet un mouvement de rotation au plateau (40) porte-satellites (30), par l'intermédiaire d'une liaison rigide avec celui-ci. Le plateau (40) est monté glissant en rotation dur une partie interne non dentée de la couronne (20), par exemple, par l'intermédiaire d'un système de roulements. Le plateau (40) a donc sa vitesse de rotation (WO3) égale à W0. Le mécanisme de création de vitesses comprend, un premier pignon (611), de denture déterminée, fixé rigidement sur le premier axe (600). Ce premier pignon (611) transmet un mouvement de rotation à un deuxième axe (601) en engrenant sur une roue (612) fixée rigidement sur ce deuxième axe (601) ; un deuxième pignon (613), de denture déterminée, est fixé rigidement sur le deuxième axe (601), ce deuxième pignon (613) transmet un mouvement de rotation, à la couronne (20) par l'intermédiaire, par exemple, d'une denture, dite extérieure, située sur la face extérieure de la couronne engrenant avec le deuxième pignon (613) et au même niveau que la denture intérieure. Ainsi la couronne (20) a une vitesse de rotation W2 proportionnelle à W0. Le coefficient de proportionnalité dépend des dimensions et des dentures connues du premier, du deuxième pignon (611, 613) et de la roue (612). Les vitesses d'entrée du mécanisme d'entraînement WO3 et W2 étant connues, la vitesse (W1) du pignon (10) solidaire de l'axe (11) de sortie du dispositif de réduction de vitesse, est déterminée par la formule F1.

Dans le dispositif de la figure 5, le mécanisme de création de vitesses comprend un troisième pignon (621), de denture déterminée, monté rigidement sur le premier axe (600). Ce troisième pignon (621) transmet un mouvement de rotation à la couronne (20), du mécanisme d'entraînement (Fig. 2), par exemple, par l'intermédiaire d'une denture, dite extérieure, située sur l'extérieur de la couronne et engrenant avec le troisième pignon (621). La denture extérieure de la couronne (20) est située au même niveau que la denture intérieure. Cette configuration permet de diminuer le couple de rotation tendant à modifier l'angle d'inclinaison de l'axe de rotation de la couronne (20). Ainsi la couronne (20) a une vitesse de rotation W2 proportionnelle à W0. Le coefficient de proportionnalité dépend des dimensions et des dentures connues du troisième pignon et de la couronne. Le mécanisme de création de vitesses comprend également un quatrième pignon (622) monté rigidement sur le premier axe (600). Ce quatrième pignon transmet un mouvement de rotation au plateau (40) porte satellite(s) (30) du mécanisme d'entraînement, par l'intermédiaire d'une denture située sur la tranche du plateau (40). Le plateau (40) a donc une vitesse de rotation (WO3) proportionnelle à W0. Le coefficient de proportionnalité dépend des dimensions et des dentures connues du quatrième pignon (622) et du plateau. Les vitesses d'entrée du mécanisme d'entraînement WO3 et W2 étant connues, la vitesse (W1) du pignon (10) solidaire de l'axe (11) de sortie du dispositif de réduction de vitesse, est déterminée par la formule F1.

Dans la variante de réalisation de l'invention de la figure 6, le mécanisme de création de vitesses comprend un cinquième pignon (631). Ce cinquième pignon (631), et le pignon (10) constituant le premier élément du mécanisme d'entraînement, sont solidaires du premier axe (600) et sont donc animés de la vitesse de rotation source W0. Le cinquième pignon (631) transmet un mouvement de rotation à la couronne (20) libre en rotation par rapport au bâti (80), par l'intermédiaire d'un système de satellites (70) montés libres en rotation autour de leur axe (71) fixes par rapport au bâti (80), et engrenant sur une denture intérieure de la couronne (20). La couronne (20) a donc une vitesse de rotation (W2) proportionnelle à la vitesse source W0. Le coefficient de proportionnalité dépend des dimensions et des dentures connues des satellites (70) et du cinquième pignon (631). La vitesse W1 égale à W0 est transmise par le pignon (10) et les satellites (30) sont montés libre en rotation sur les axes (31) fixés au plateau (40). Le plateau (40) est solidaire de l'axe de sortie (41) qui est aligné avec l'axe (600) du pignon (10). Le plateau (40) est monté libre en rotation par rapport à la couronne (20), par exemple, par l'intermédiaire d'un système de roulements. La couronne (20) est donc entraînée en rotation sans être en porte-à-faux du fait du montage libre en rotation de la couronne (20) sur la bâti (80) et du fait du montage glissant et libre en rotation du plateau (40) sur une partie non dentée de la couronne (20). Ainsi, les vitesses d'entrée du mécanisme d'entraînement W1 et W2 étant connues, la vitesse de sortie WO3 du plateau (40) et donc de l'axe 41, est déterminée par la formule F2. Dans cette variante, les dentures respectives du cinquième pignon (631) et pignon (10) du mécanisme d'entraînement ne sont pas nécessairement identiques. Pour obtenir des rapports de réduction élevés de l'ordre de 1000 à 5000, les dentures respectives du cinquième pignon (631) et du pignon (10) du mécanisme d'entraînement sont préférentiellement différentes. Ainsi, à titre d'exemple, pour obtenir un rapport de réduction de l'ordre de 4400, le cinquième pignon (631) comporte 35 dents et dans cet exemple la partie couronne engrenant sur les satellites comprend 88 dents. De même, le pignon (10) du mécanisme d'entraînement comprend 17 dents, les satellites (30) comprennent 33 dents et la partie de la couronne (20) engrenant sur ces satellites comprend alors 83 dents.

Dans le dispositif de la figure 7, le mécanisme de création de vitesses comprend un sixième pignon (641), de denture déterminée. Ce sixième pignon (641) et le pignon (10) sont solidaires du premier axe (600). Le sixième pignon (641) transmet à un mouvement de rotation au plateau (40) par l'intermédiaire d'un étage de réduction planétaire. Cet étage de réduction planétaire comprend le pignon (641), les satellites (90) et la couronne (100) fixe par rapport au bâti (80). Les satellites (90) sont montés libres sur les axes (91) solidaires au plateau (40). Le plateau est également monté glissant sur le premier l'axe (600). Le plateau (40) a donc une vitesse de rotation (WO3) proportionnelle à la vitesse source W0. Le coefficient de proportionnalité dépend des dimensions et des dentures connues des éléments de l'étage de réduction planétaire. La vitesse W1 du pignon (10) est égale à W0. Les satellites (30) sont montés libres en rotation sur les axes (31) fixés sur le plateau (40). La couronne (20) est solidaire de l'axe de sortie (51) qui est aligné avec l'axe (600). La couronne (20) est montée libre en rotation par rapport à la couronne (100) du mécanisme de création de vitesse, par exemple, par l'intermédiaire d'une liaison glissante. De même, la couronne (20) est montée glissante sur le premier axe (600). La couronne (20) est donc entraînée en rotation sans être en porte-à-faux du fait de son montage libre en rotation sur la couronne (100) du mécanisme de création de vitesse, et du fait de sont montage glissant sur le premier axe (600). Ainsi, les vitesses d'entrée du mécanisme d'entraînement W1 et WO3 étant connues, la vitesse de sortie W2 de l'axe 51 est déterminée par la formule F3.

Dans le dispositif de la figure 8, le mécanisme de création de vitesse comprend un septième pignon (651), de denture déterminée, fixé rigidement sur le premier axe (600). Par l'intermédiaire de la roue (653) solidaire de l'axe (11), le septième pignon (651) transmet un mouvement de rotation à l'axe (11) sur lequel est fixé le pignon (10) du mécanisme d'entraînement. Le mécanisme de création de vitesses comprend également un huitième pignon (652) solidaire du premier axe (600). Ce huitième pignon (652) transmet un mouvement de rotation au plateau (40) porte-satellites (30) monté libre en rotation sur l'axe (11), par l'intermédiaire d'une denture située sur la tranche du plateau (40). Le plateau (40) et le pignon (10) ont donc des vitesses respectives (WO3, W1) de rotation proportionnelles à la vitesse source W0. Les coefficients de proportionnalité dépendent des dimensions et des dentures connues du septième et huitième pignon (651, 652), de la roue (653) et du plateau (40). Ainsi la vitesse de sortie est celle de la rotation (W2) de la couronne (20) qui est déterminée par la formule F3.

Compte tenu des différentes formules (F1, F2, F3), on conçoit qu'un dispositif de réduction réalisé suivant le diagramme de base de l'invention (Fig. 3A) suffit pour obtenir un grand rapport de réduction, là où les dispositifs de l'art antérieur nécessiteraient plusieurs dispositifs étages de réduction. Ainsi, les réalisations de dispositif de réduction de vitesse angulaire selon l'invention offrent, à rapport de réduction équivalent, un encombrement et un coût nettement plus avantageux que les dispositifs de l'art antérieur.

Il est clair que d'autres modifications à la portée de l'homme du métier entrent dans le cadre de l'invention, telle que définie par les revendications.

## Revendications

1. Dispositif de réduction comprenant un mécanisme de création de vitesses et un mécanisme d'entraînement, le mécanisme d'entraînement étant composé d'un pignon (10) et d'une couronne (20), de même centre fixe, de rayons déterminés différents et de vitesses de rotation (W1, W2) non nulles, et, ainsi que d'au moins un satellite (30), engrenant sur le pignon (10) et la couronne (20) grâce à des dentures, le centre (O3) des satellites (30) décrivant une trajectoire circulaire, de rayon déterminé intermédiaire par rapport aux rayons du pignon (10) et de la couronne (20), et concentrique par rapport au pignon (10) et à la couronne (20), avec une vitesse de rotation (WO3) déterminée, le pignon (10), la couronne (20) et les satellites (30) étant fixes en translation axiale par rapport à un bâti (80), le mécanisme de création de vitesses créant au moins deux vitesses angulaires (W1, W2) corrélées à partir d'une seule vitesse angulaire (WO) connue, ces deux vitesses angulaires d'entrée corrélées ainsi créées étant appliquées respectivement au pignon (10) et à la couronne (20), pour obtenir une vitesse angulaire de sortie, qui est la vitesse d'un plateau (40) par rapport auquel les satellites (30) sont montés en rotation, **caractérisé en ce que** la couronne (20), à denture intérieure seulement, est montée en rotation par rapport au bâti (80), constituant une surface cylindrique glissante, qui lui sert de guide, et **en ce que** le ou les axes (31) des satellites (30), sur lesquels les satellites (30) sont montés en rotation, sont solidaires d'un plateau (40) lisse sur ses bords monté en rotation par rapport à une surface cylindrique glissante de la couronne (20), qui lui sert de guide le plateau (40) recevant des axes (31) des satellites (30) un mouvement de rotation qui ici sert de guide le plateau (40) et fournissant la seule vitesse de sortie.

2. Dispositif de réduction selon la revendication 1, **caractérisé en ce que**, les rayons des éléments du mécanisme d'entraînement sont déterminés de sorte que le rayon du pignon (10) est inférieur au rayon de la couronne (20), et que le rayon de la couronne (20) est égal à la somme du rayon du pignon (10) et du diamètre des satellites (30).

3. Dispositif de réduction selon la revendication 1 ou 2, **caractérisé en ce que** le mécanisme de création de vitesses comprend un premier axe (600) auquel est appliquée la vitesse d'entrée (W0), et sur lequel sont montés rigidement le pignon (10) du mécanisme d'entraînement et un deuxième pignon (631), de denture déterminée, engrenant sur un jeu de satellites (70) dont les axes (71) sont fixes, ces satellites (70) engrenant sur la couronne (30) pour l'animer de la première vitesse angulaire (W2) créée par le mécanisme de création de vitesse, le pignon (10) du mécanisme d'entraînement étant donc animé de la deuxième vitesse angulaire (W1) créée par le mécanisme de création de vitesse, cette deuxième vitesse angulaire (W1) étant égale à la vitesse d'entrée (W0).

4. Dispositif de réduction selon la revendication 3, **caractérisé en ce que** les dentures du pignon (10) du mécanisme d'entraînement et du pignon (631) du mécanisme de création de vitesse, montés rigidement sur le premier axe (600) animé de la vitesse angulaire source, sont différentes pour obtenir des rapports de réduction élevés.

**Patentansprüche**

1. Untersetzungsvorrichtung mit einem Geschwindigkeitsstufen-Erzeugungsmechanismus und einem Antriebsmechanismus, wobei der Antriebsmechanismus aus einem Ritzel (10) und einem Kranz (20) besteht, die dasselbe feststehende Zentrum haben, unterschiedliche, bestimmte Radien haben sowie von null verschiedene Drehgeschwindigkeiten (W1, W2), sowie wenigstens einem Planetenrad (30), das in das Ritzel (10) und den Kranz (20) mittels einer Verzahnung eingreift, wobei das Zentrum (03) der Planetenräder (30) eine kreisförmige Bahn mit bestimmtem Radius, der zwischen dem Radius des Ritzels (10) und dem Radius des Kranzes (20) liegt, beschreibt, die bezüglich des Ritzels (10) und des Kranzes (20) konzentrisch ist, mit einer bestimmten Drehgeschwindigkeit (WO3), wobei das Ritzel (10), der Kranz (20) und die Planetenräder (30) bezüglich eines Rahmens (80) gegen axiale Translation festgelegt sind, wobei der Geschwindigkeitsstufen-Erzeugungsmechanismus wenigstens zwei Winkelgeschwindigkeiten (W1, W2) erzeugt, die mit einer einzigen bekannten Winkelgeschwindigkeit (W0) korrelieren, wobei die beiden auf diese Weise erzeugten, korrelierten Eingangs-Winkelgeschwindigkeiten jeweils an das Ritzel (10) und den Kranz (20) angelegt werden, um eine Ausgangs-Winkelgeschwindigkeit zu erhalten, welche die Geschwindigkeit einer Platte (40) ist, bezüglich welcher die Planetenräder (30) drehbar sind, **dadurch gekennzeichnet, daß** der Kranz (20), der nur innen verzahnt ist, drehbar bezüglich des Rahmens (80) angebracht ist und eine zylindrische Gleitfläche bildet, die ihm als Führung dient, und daß die Achse (31) oder die Achsen (31) der Planetenräder (30), auf denen die Planetenräder (30) drehbar angebracht sind, fest mit einer an ihren Rändern glatten Platte (40) verbunden sind, die drehbar bezüglich einer zylindrischen Gleitfläche des Kranzes (20) angebracht ist, die ihr als Führung dient, wobei die Platte (40) von den Achsen (31) der Planetenräder (30) eine Drehbewegung erhält und die einzige Ausgangsgeschwindigkeit liefert.

2. Untersetzungsvorrichtung nach Anspruch 1, **dadurch gekennzeichnet, daß** die Radien der Elemente des Antriebsmechanismus so bestimmt sind, daß der Radius des Ritzels (10) kleiner als der Radius des Kranzes (20) ist und daß der Radius des Kranzes (20) gleich der Summe aus dem Radius des Ritzels (10) und dem Durchmesser der Planetenräder (30) ist.

3. Untersetzungsvorrichtung nach Anspruch 1 oder Anspruch 2, **dadurch gekennzeichnet, daß** der Geschwindigkeitsstufen-Erzeugungsmechanismus eine erste Achse (600) aufweist, an welche die Eingangsgeschwindigkeit (W0) angelegt wird und an der starr das Ritzel (10) des Antriebsmechanismus sowie ein zweites Ritzel (631) mit bestimmter Verzahnung angebracht sind, welches in einen Satz von Planetenrädern (70) eingreift, deren Achsen (71) feststehend sind, wobei die Planetenräder (70) in den Kranz (30) eingreifen, um diesen in der ersten Winkelgeschwindigkeit (W2) anzutreiben, die von dem Geschwindigkeitsstufen-Erzeugungsmechanismus erzeugt wird, wobei das Ritzel (10) des Antriebsmechanismus somit mit der zweiten Winkelgeschwindigkeit (W1) angetreiben wird, die von dem Geschwindigkeitsstufen-Erzeugungsmechanismus erzeugt wird, wobei diese zweite Winkelgeschwindigkeit (W1) gleich der Eingangsgeschwindigkeit (W0) ist.

4. Untersetzungsvorrichtung nach Anspruch 3, **dadurch gekennzeichnet, daß** die Verzahnungen des Ritzels (10) des Antriebsmechanismus sowie des Ritzels (631) des Geschwindigkeitsstufen-Erzeugungsmechanismus, die starr an der mit der Eingangs-Winkelgeschwindigkeit angetriebenen ersten Achse (600) angebracht sind, unterschiedlich sind, um hohe Untersetzungsverhältnisse zu erzielen.

**Claims**

1. Reduction device comprising a speed creation mechanism and a drive mechanism, the drive mechanism being composed of a pinion (10) and a ring gear (20), with the same fixed centre, different predetermined radii and non-zero rotation velocities (W1, W2), and also at least one planet gear (30), meshing with the pinion (10) and the ring gear (20) by means of teeth, the centre (O3) of the planet gears (30) describing a circular trajectory, with a predetermined radius that is intermediate with respect to the radii of the pinion (10) and of the ring gear (20), and concentric with respect to the pinion (10) and to the ring gear (20), with a predetermined rotation speed (WO3), the pinion (10), the ring gear (20) and the planet gears (30) being fixed in axial translation with respect to a frame (80), the speed creation mechanism creating at least two correlated angular velocities (W1, W2) on the basis of just one known angular velocity (W0), these two correlated input angular velocities thus created being applied respectively to the pinion (10) and the ring gear (20), in order to obtain an output angular velocity, which is the speed of a plate (40) with respect to which the planet gears (30) are mounted in rotation, **characterised in that** the ring gear (20), with inner teeth only, is mounted in rotation with respect to the frame (80), constituting a sliding cylindrical surface, which serves as a guide for it, and **in that** the axis or axes (31) of the planet gears (30), on which the planet gears (30) are mounted in rotation, are integral with a plate (40) that is smooth at its edges mounted in rotation with respect to a sliding cylindrical surface of the ring gear (20), which serves as a guide for it, the plate (40) receiving from the axes (31) of the planet gears (30) a rotation movement and providing the only output speed.

2. Reduction device according to Claim 1, **characterised in that** the radii of the elements of the drive mechanism are predetermined such that the radius of the pinion (10) is less than the radius of the ring gear (20), and that the radius of the ring gear (20) is equal to the sum of the radius of the pinion (10) and the diameter of the planet gears (30).

3. Reduction device according to Claim 1 or 2, **characterised in that** the speed creation mechanism comprises a first axis (600) to which the input velocity (W0) is applied, and on which are rigidly mounted the pinion (10) of the drive mechanism and a second pinion (631), with predetermined toothing, meshing with a set of planet gears (70), the axes (71) of which are fixed, these planet gears (70) meshing with the ring gear (30) in order to impress on it the first angular velocity (W2) created by the speed creation mechanism, the pinion (10) of the drive mechanism having thus impressed on it the second angular velocity (W1) created by the speed creation mechanism, this second angular velocity (W1) being equal to the input velocity (W0).

4. Reduction device according to Claim 3, **characterised in that** the teeth of the pinion (10) of the drive mechanism and of the pinion (631) of the speed creation mechanism, rigidly mounted on the first axis (600) on which the source angular velocity is impressed, are different in order to obtain high reduction ratios.

FIG 1

1
W2
2
WO3
W1
O3
3
× O

FIG 2

40
31
50
80
50
20
30
50
50
10
11
30

11
20
30
W1
30
80
613
10
40
31
601
611
600
W0
FIG 4
612

FIG 5

FIG 6

FIG 7

FIG 3A

FIG 3B

FIG 8